# EUROPÄISCHE PATENTSCHRIFT

(11) **EP 2 600 120 B1**
(45) Veröffentlichungstag und Bekanntmachung des Hinweises auf die Patenterteilung: **12.07.2017**
(21) Anmeldenummer: 12007871.2
(22) Anmeldetag: 22.11.2012
(51) Int. Cl.: G01F 1/69, G01F 1/698, G01F 1/699

(54) **Verfahren und Vorrichtung zur Messung der Strömungsgeschwindigkeit von Fluiden**
Method and device for measuring a fluid flow velocity
Procédé et dispositif de mesure de la vitesse d'écoulement de fluides

(30) Priorität: 01.12.2011 DE 102011119823
(43) Veröffentlichungstag der Anmeldung: 05.06.2013
(73) Patentinhaber: Sensus Spectrum LLC, Raleigh, NC 27615 (US)
(72) Erfinder: Schäfer, Burghard, 67112 Mutterstadt (DE); Chu, Anh Tuan, 67071 Ludwigshafen (DE)
(74) Vertreter: Patentanwälte Dr. Keller, Schwertfeger

(56) Entgegenhaltungen:
- DE-C1- 19 654 014

## Beschreibung

Die Erfindung betrifft ein Verfahren und eine Vorrichtung zur Messung der Strömungsgeschwindigkeit von Fluiden.

Zur Messung der Strömungsgeschwindigkeit von Fluiden werden beispielsweise thermische Sensoren mit wenigstens einem Heizwiderstand und wenigstens einem Sensorwiderstand eingesetzt. Bei einer Art solcher thermischer Sensoren wird der Heizwiderstand mit Hilfe eines pulsförmigen Stroms erhitzt. Wie beispielsweise die WO 2008/139237 A1 beschreibt, vermeidet die pulsförmige Stromversorgung die Bildung von Gasblasen an der Oberfläche des Sensors.

Die DE 199 39 942 A1 beschreibt ein Verfahren zur Messung einer Durchflussmenge eines strömenden Fluids, wobei das Heizelement oder das Sensorelement gepulst geheizt wird, so dass das Sensorelement erwärmt wird. Das Sensorelement steht mit dem zu messenden Fluid in Wirkverbindung. Aus dem zeitlichen Verlauf eines im Sensorelement stattfindenden Heiz- und Abkühlvorgangs wird die Durchflussmenge berechnet. Die Temperaturerhöhungen der Sensorelemente aufgrund des Heizvorgangs sind gering und betragen ca. 0,1°C bis 2°C. Da die maximale Temperaturdifferenz, die zwischen maximal und minimal messbarer Durchflussmenge auftritt, wiederum nur einen Bruchteil der Temperaturerhöhungen der Sensorelemente aufgrund des Heizvorgangs beträgt, bedeutet dies, dass sehr geringe Temperaturschwankungen präzise erfasst werden müssen, um den Durchfluss mit einer hohen Genauigkeit angeben zu können. Folglich werden an die Messvorrichtungen solcher Durchflussmesser hohe Anforderungen gestellt, was wiederum zu hohen Betriebs- und Herstellkosten führt.

DE 196 54 014 C1 beschreibt ein weiteres Durchflussmengen-Messverfahren mit gepulsten Heizsignalen. Weiterhin sind viele der bekannten thermischen Sensoren nicht für einen mehrjährigen Batteriebetrieb geeignet, da die verwendeten Heizströme zu groß sind und somit der Energieverbrauch zu hoch ist.

Es ist Aufgabe der vorliegenden Erfindung, ein verbessertes Verfahren zur Messung der Strömungsgeschwindigkeit von Fluiden mittels eines thermischen Sensors mit wenigstens einem Heizwiderstand und wenigstens einem Sensorwiderstand, wobei der Heizwiderstand den Sensorwiderstand erwärmt, anzugeben, das eine hohe Messgenauigkeit aufweist und das insbesondere für batteriebetriebene Vorrichtungen zur Messung der Strömungsgeschwindigkeit von Fluiden geeignet ist.

Weiter ist es Aufgabe der Erfindung, eine entsprechende batteriebetriebene und kostengünstige Messvorrichtung bereitzustellen, die insbesondere zur Durchführung des erfindungsgemäßen Verfahrens geeignet ist.

Erfindungsgemäß wird diese Aufgabe durch ein Verfahren zur Messung der Strömungsgeschwindigkeit von Fluiden mittels eines thermischen Sensors mit wenigstens einem Heizwiderstand und wenigstens einem Sensorwiderstand gelöst, wobei der Heizwiderstand den Sensorwiderstand erwärmt und das Verfahren die folgenden Schritte umfasst:
Zunächst wird der wenigstens eine Heizwiderstand während der Dauer eines Pulses eines Heizstroms erwärmt. Zeitgleich, d.h. während der Heizwiderstand durch den Strompuls erwärmt wird, wird ein durch den Sensorwiderstand fließender Strom in einem ersten Integrator während einer vorgegebenen Zeitdauer integrierend erfasst. Ebenso zeitgleich, d.h. während der Heizwiderstand durch den Strompuls erwärmt wird, wird ein durch einen Referenzwiderstand fließender Strom in einem zweiten Integrator während der vorgegebenen Zeitdauer integrierend erfasst. Aus den integrierend erfassten Messwerten werden jeweils ein gemittelter Sensorwiderstandswert und ein gemittelter Referenzwiderstandswert ermittelt. In einem nachgeschalteten Instrumentenverstärker werden der gemittelte Sensorwiderstandswert und der gemittelte Referenzwiderstandswert verstärkt und aus den beiden verstärkten Werten ein Differenzsignal gebildet. Das Differenzsignal, das ein Maß für die Strömungsgeschwindigkeit des zu messenden Fluids ist, wird beispielsweise mittels eines A/D-Wandlers in ein digitales Signal umgewandelt und ausgegeben.

Instrumentenverstärker haben bekanntermaßen eine gute Gleichtaktunterdrückung gegenüber Störgrößen. Weiterhin sind die Offsetspannungen der Eingänge sehr gering. Aufgrund der Messung des Referenzwiderstandswertes und der Bildung der Differenz mit dem gemessenen Sensorwiderstandswert lassen sich Offsetspannungen der Integratoren nahezu eliminieren.

Das Ergebnis ist eine genaue Angabe eines Maßes für die Strömungsgeschwindigkeit.

Der Stromverbrauch ist bei dem beschriebenen Verfahren vergleichsweise gering, so dass das Verfahren auch bei batteriebetriebenen thermischen Sensoren zur Messung der Strömungsgeschwindigkeit von Fluiden eingesetzt werden kann.

Bei einer vorteilhaften Ausführungsform erfassen der erste und zweite Integrator im Wesentlichen während der gesamten Dauer des Heizstrompulses den durch den Sensorwiderstand bzw. den durch den Referenzwiderstand fließenden Strom integrierend. Hierbei wird das maximal mögliche Messintervall ausgenutzt, um eine optimale Mittelung der Messwerte von dem Sensorwiderstand bzw. von dem Referenzwiderstand zu erhalten.

Für eine hohe Temperaturempfindlichkeit des Sensorwiderstands weist bei einer weiteren vorteilhaften Ausführung der Sensorwiderstand einen Temperaturkoeffizienten α und einen Grundwiderstand R0 auf, die vergleichsweise groß sind, wobei vorzugsweise der Temperaturkoeffizient α > 0,003 1/K und der Grundwiderstand R0 > 10kΩ sind. Unter Grundwiderstand R0 ist der Widerstand im unbeheizten Zustand zu verstehen.

Die Aufgabe der vorliegenden Erfindung wird weiterhin gemäß Anspruch 5 durch eine Messvorrichtung zur Messung der Strömungsgeschwindigkeit von Fluiden, eingerichtet zur Durchführung des Verfahrens nach einem der Ansprüche 1 bis 4 gelöst, umfassend einen thermischen Sensor mit wenigstens einem Heizwiderstand und wenigstens einem Sensorwiderstand, wobei der Heizwiderstand mit dem Sensorwiderstand thermisch gekoppelt ist, und eine Messschaltung, wobei die Messschaltung einen ersten Integrator zur integrierenden Messung eines durch den Sensorwiderstand fließenden Stroms, einen zweiten Integrator zur integrierenden Messung eines durch einen Referenzwiderstand fließenden Stroms, einen Instrumentenverstärker, einen Analog/Digital-Wandler und eine Ausgabeeinheit für das mittels der Messschaltung ermittelte Signal umfasst.

Die Messvorrichtung ermöglicht die Durchführung des erfindungsgemäßen Verfahrens, so dass mit Hilfe der Messvorrichtung die Strömungsgeschwindigkeit mit einer hohen Genauigkeit angegeben werden kann.

Das erfindungsgemäße Verfahren wird somit bevorzugt bei einer Vorrichtung eingesetzt, bei der der Heizwiderstand mit dem Sensorwiderstand thermisch gekoppelt ist, wobei der Sensorwiderstand durch den Heizwiderstand thermisch erwärmt wird und bei der der Heizwiderstand mit dem strömenden Fluid in thermischer Verbindung steht. Hierbei gilt, dass bei hohen Strömungsgeschwindigkeiten des Fluids eine große Wärmeübertragung vom Heizwiderstand in das Fluid erfolgt, während bei geringen Strömungsgeschwindigkeiten nur eine geringe Übertragung der Wärme von dem Heizwiderstand in das Fluid stattfindet. Bei hohen Strömungsgeschwindigkeiten des Fluids wird der Sensorwiderstand auf einen niedrigeren Wert erwärmt als bei kleinen Strömungsgeschwindigkeiten des Fluids. Da der Widerstandswert des Sensorwiderstands temperaturabhängig ist, kann über den Stromfluss durch den Sensorwiderstand auf die Temperatur des Sensorwiderstands und somit auf die Strömungsgeschwindigkeit des Fluids geschlossen werden.

Um Offsetspannungen zwischen dem ersten und dem zweiten Integrator zu vermeiden, sind der erste Integrator und der zweite Integrator bei einer bevorzugten Ausführungsform auf einem Chip angeordnet.

Es ist bevorzugt, dass ein Referenzwiderstand gewählt wird, der einen Widerstandswert aufweist, der etwa in der Mitte des minimalen und maximalen Widerstandswertes des Sensorwiderstandes liegt. Darüber hinaus weist der Instrumentenverstärker in bevorzugter Weise einen hohen Verstärkungsfaktor auf, so dass der A/D-Wandler nur die Signaländerungen erfasst, die durch die Änderung der Durchflussmenge hervorgerufen sind. Somit kann sowohl bei hohen Strömungsgeschwindigkeiten als auch bei geringen Strömungsgeschwindigkeiten die Strömungsgeschwindigkeit mit einer hohen Genauigkeit angegeben werden.

Um Temperatureinflüsse des Referenzwiderstandes möglichst gering zu halten, weist der Referenzwiderstand einen sehr kleinen Temperaturkoeffizienten auf.

Da das erfindungsgemäße Verfahren vergleichsweise wenig Strom benötigt, kann bei der Messvorrichtung eine Batterie vorgesehen sein.

Die vorliegende Erfindung wird anhand der beigefügten Zeichnung näher erläutert, in der zeigt:

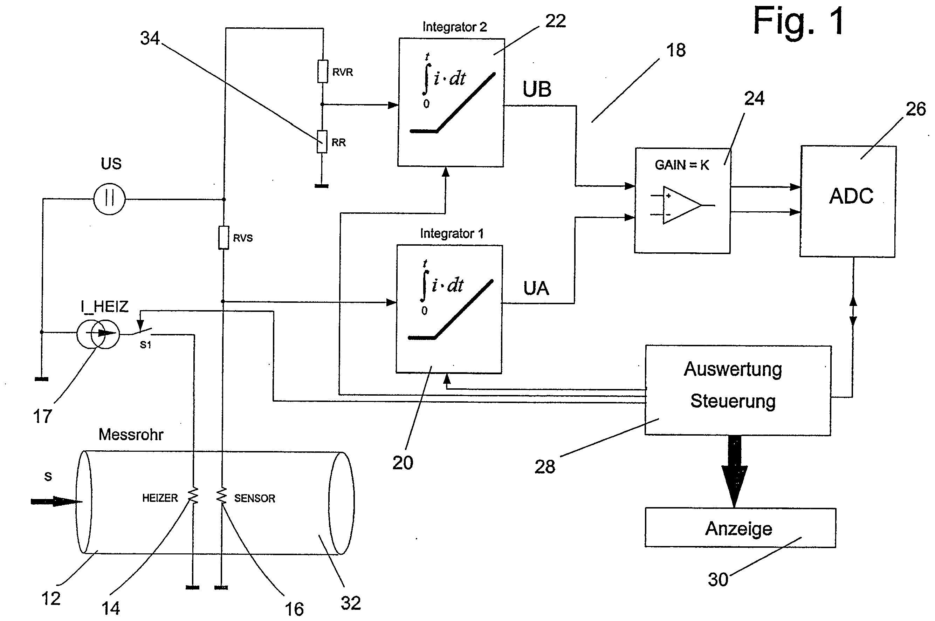

- Fig. 1: eine Schaltskizze einer Messvorrichtung.

Fig. 1 zeigt die Schaltskizze einer Messvorrichtung 10. Die Messvorrichtung 10 umfasst einen thermischen Sensor 12 mit einem Heizwiderstand 14 und einem Sensorwiderstand 16, eine Stromquelle in Form einer Batterie 17 und eine Messschaltung 18.

Der Heizwiderstand 14 des thermischen Sensors 12 wird mittels eines Stroms aus der Stromquelle 17 erhitzt, wobei der Heizwiderstand 14 wiederum den Sensorwiderstand 16 erwärmt.

Die Messvorrichtung 10 umfasst eine Messschaltung 18 mit einem erstem Integrator 20 und einem zweiten Integrator 22. Weiterhin sind ein Instrumentenverstärker 24, ein A/D-Wandler 26, eine Auswerte- und Steuereinheit 28 und eine Anzeigevorrichtung 30 vorgesehen.

Der thermische Sensor 12 ist an einem Messrohr 32 angeordnet, durch das das zu messende Fluid strömt.

Der Heizwiderstand 14 wird mit einem konstanten Strom pulsförmig erhitzt, indem ein Schalter 17 an der Stromversorgung für eine vorgegebene Zeitdauer geschlossen wird. Der Heizwiderstand 14 des thermischen Sensors 12 steht mit einem durch das Messrohr 32 strömenden Fluid in thermischem Kontakt. In Abhängigkeit von der Strömungsgeschwindigkeit des Fluids wird Wärme an das Fluid abgegeben. Da der Heizwiderstand 14 mit dem Sensorwiderstand 16 thermisch gekoppelt ist, wird der Sensorwiderstand 16 in Abhängigkeit von der Strömungsgeschwindigkeit des Fluids durch den Heizwiderstand 14 auf eine bestimmte Temperatur erwärmt.

Während der Dauer des Strompulses, der den Heizwiderstand 14 erwärmt, wird ein am Sensorwiderstand 16 anliegender Strom im ersten Integrator 20 integrierend erfasst. Der erfasste Wert des Stroms ist abhängig von der Temperatur des Sensorwiderstandes 16.

Ebenfalls während der Dauer des Strompulses, der den Heizwiderstand 14 erwärmt, wird in dem zweiten Integrator 22 der durch einen Referenzwiderstand 34 fließende Strom integrierend erfasst.

Die in den Integratoren 20, 22 ermittelten integrierten Werte, nämlich der gemittelte Sensorwiderstandswert und der gemittelte Referenzwiderstandswert, werden in den Instrumentenverstärker 24 gegeben. Anschließend wird das Differenzsignal in einem Analog/Digital-Wandler 26 von einem analogen Signal in ein digitales Signal umgewandelt. Das digitale Signal ist ein Maß für die Strömungsgeschwindigkeit des zu messenden Fluids und wird mit einem Referenzwert in einer Auswerteeinheit 28 zur Angabe der tatsächlichen Strömungsgeschwindigkeit verglichen. Der so ermittelte Wert der Strömungsgeschwindigkeit wird in der Anzeigeeinheit 30 ausgegeben.

Beide Integratoren 20, 22 befinden sich auf einem Chip, so dass das Differenzsignal Offset-unabhängig ist.

Der Widerstandswert des Sensorwiderstandes 16 schwankt von einem minimalen Widerstandswert, der bei hohen Strömungsgeschwindigkeiten erreicht wird, bis hin zu einem maximalen Widerstandswert, der bei Strömungsgeschwindigkeiten von nahezu Null erreicht wird. Um eine gute Messauflösung sowohl bei hohen als auch bei niedrigen Strömungsgeschwindigkeiten zu erreichen, weist der temperaturempfindliche Sensorwiderstand 16 einen Temperaturkoeffizienten α und einen Grundwiderstand auf, die möglichst groß sind.

Da der Referenzwiderstand 34 möglichst temperaturunabhängig sein soll, wird beim Referenzwiderstand 34 ein sehr kleiner Temperaturkoeffizient gewählt. Weiterhin weist der Referenzwiderstand 34 einen Widerstandswert auf, der zwischen dem minimalen und maximalen Widerstandswert des Sensorwiderstandes 16 liegt.

## Patentansprüche

1. Verfahren zur Messung der Strömungsgeschwindigkeit von Fluiden mittels eines thermischen Sensors mit wenigstens einem Heizwiderstand (14) und wenigstens einem Sensorwiderstand (16), wobei der Heizwiderstand (14) mit dem Sensorwiderstand (16) thermisch gekoppelt ist, **gekennzeichnet durch** folgende Schritte:
- Erwärmen des wenigstens einen Heizwiderstands (14) während der Dauer eines Pulses eines Heizstroms;
- Zeitgleiches integrierendes Erfassen eines durch den Sensorwiderstand (16) fließenden Stroms in einem ersten Integrator (20) während einer vorgegebenen Zeitdauer und zeitgleiches integrierendes Erfassen eines durch einen Referenzwiderstand (34) fließenden Stroms in einem zweiten Integrator (22) während der vorgegebenen Zeitdauer;
- Bestimmen eines gemittelten Sensorwiderstandswerts und eines gemittelten Referenzwiderstandswertes;
- Verstärken des gemittelten Sensorwiderstandswerts und des gemittelten Referenzwiderstandswerts und Bildung eines Differenzsignals aus dem gemittelten Sensorwiderstandswert und dem gemittelten Referenzwiderstandswert in einem Instrumentenverstärker (24);
- Ausgeben des Differenzsignals.

2. Verfahren nach Anspruch 1, **dadurch gekennzeichnet, dass** der erste und zweite Integrator im Wesentlichen während der gesamten Dauer des Pulses des Heizstroms den durch den Sensorwiderstand bzw. den durch den Referenzwiderstand fließenden Strom integrierend erfassen.

3. Verfahren nach Anspruch 1 oder 2, **dadurch gekennzeichnet, dass** das Differenzsignal ein analoges Signal ist, das mittels eines A/D-Wandlers (26) in ein digitales Signal gewandelt wird.

4. Verfahren nach einem der vorhergehenden Ansprüche, **dadurch gekennzeichnet, dass** der Sensorwiderstand einen Temperaturkoeffizienten α und einen Grundwiderstand R0 aufweist, die vergleichsweise groß, vorzugsweise α > 0,003 1/K und R0 > 10kΩ sind.

5. Messvorrichtung zur Messung der Strömungsgeschwindigkeit von Fluiden, eingerichtet zur Durchführung des Verfahrens nach einem der Ansprüche 1 bis 4, umfassend einen thermischen Sensor (12) mit wenigstens einem Heizwiderstand (14) und wenigstens einem Sensorwiderstand (16), wobei der Heizwiderstand mit dem Sensorwiderstand thermisch gekoppelt ist, und eine Messschaltung (18), wobei die Messschaltung (18) umfasst:
- einen ersten Integrator (20) zur integrierenden Messung eines Stroms durch den Sensorwiderstand (16),
- einen zweiten Integrator (22) zur integrierenden Messung eines Stroms durch einen Referenzwiderstand (34),
- einen Differenzverstärker (24) und
- eine Ausgabeeinheit (28) für das mittels der Messschaltung (18) ermittelte Signal.

6. Messvorrichtung nach Anspruch 5, **dadurch gekennzeichnet, dass** der erste Integrator (20) und der zweite Integrator (22) auf einem Chip angeordnet sind.

7. Messvorrichtung nach Anspruch 5 oder 6, **dadurch gekennzeichnet, dass** der Referenzwiderstand (34) einen Widerstandswert aufweist, der in etwa in der Mitte des minimalen und maximalen Widerstandswerts des Sensorwiderstands (16) liegt.

8. Messvorrichtung nach einem der Ansprüche 5 bis 7, **dadurch gekennzeichnet, dass** der Instrumentenverstärker einen hohen Verstärkungsfaktor aufweist.

9. Messvorrichtung nach einem der Ansprüche 5 bis 8, **dadurch gekennzeichnet, dass** der Sensorwiderstand einen Temperaturkoeffizienten α und einen Grundwiderstand R0 aufweisen, die vergleichsweise groß, vorzugsweise α > 0,003 1/K und R0 > 10kΩ sind

10. Messvorrichtung nach einem der Ansprüche 5 bis 9, **dadurch gekennzeichnet, dass** der Referenzwiderstand (34) einen sehr kleinen Temperaturkoeffizienten hat.

11. Messvorrichtung nach einem der Ansprüche 5 bis 10, **dadurch gekennzeichnet, dass** eine Batterie (17) als Stromquelle vorgesehen ist.

## Claims

1. Method for measuring the flow speed of fluids by means of a thermal sensor that comprises at least one heating resistor (14) and at least one sensor resistor (16), the heating resistor (14) being thermally coupled to the sensor resistor (16), **characterised by** the following steps:
- heating the at least one heating resistor (14) for the duration of a pulse of a heating current;
- simultaneously detecting, in an integrating manner, a current flowing through the sensor resistor (16) in a first integrator (20) for a predetermined duration and simultaneously detecting, in an integrating manner, a current flowing through a reference resistor (34) in a second integrator (22) for the predetermined duration;
- determining an average sensor resistor value and an average reference resistor value;
- amplifying the average sensor resistor value and the average reference resistor value and producing a differential signal from the average sensor resistor value and the average reference resistor value in an instrumentation amplifier (24);
- outputting the differential signal.

2. Method according to claim 1, **characterised in that** the first and second integrator detect, in an integrating manner, the current flowing through the sensor resistor and through the reference resistor, respectively, substantially during the entire duration of the pulse of the heating current.

3. Method according to either claim 1 or claim 2, **characterised in that** the differential signal is an analogue signal that is converted into a digital signal by means of an analogue-to-digital converter (26).

4. Method according to any of the preceding claims, **characterised in that** the sensor resistor has a temperature coefficient α and a basic resistance R0 which are comparatively high, preferably α > 0.003 1/K and R0 > 10 kΩ.

5. Measuring device for measuring the flow speed of fluids, which is designed to carry out the method according to any of claims 1 to 4, comprising a thermal sensor (12) that comprises at least one heating resistor (14) and at least one sensor resistor (16), the heating resistor being thermally coupled to the sensor resistor, and a measurement circuit (18), wherein the measurement circuit (18) comprises:
- a first integrator (20) for measuring, in an integrating manner, a current through the sensor resistor (16),
- a second integrator (22) for measuring, in an integrating manner, a current through a reference resistor (34),
- a differential amplifier (24) and
- an output unit (28) for the signal determined by means of the measurement circuit (18).

6. Measuring device according to claim 5, **characterised in that** the first integrator (20) and the second integrator (22) are arranged on a chip.

7. Measuring device according to either claim 5 or claim 6, **characterised in that** the reference resistor (34) has a resistance value that is approximately halfway between the minimum and maximum resistance values of the sensor resistor (16).

8. Measuring device according to any of claims 5 to 7, **characterised in that** the instrumentation amplifier has a high amplification factor.

9. Measuring device according to any of claims 5 to 8, **characterised in that** the sensor resistor has a temperature coefficient α and a basic resistance R0 which are comparatively high, preferably α > 0.003 1/K and R0 > 10 kΩ.

10. Measuring device according to any of claims 5 to 9, **characterised in that** the reference resistor (34) has a very low temperature coefficient.

11. Measuring device according to any of claims 5 to 10, **characterised in that** a battery (17) is provided as a source of current.

## Revendications

1. Procédé de mesure de la vitesse d'écoulement de fluides au moyen d'un capteur thermique comprenant au moins une résistance chauffante (14) et au moins une résistance de détection (16), la résistance chauffante (14) étant couplée thermiquement avec la résistance de détection (16), **caractérisé par** les étapes suivantes :
- mise en chauffe de l'au moins une résistance chauffante (14) pendant la durée d'une impulsion d'un courant de chauffage ;
- acquisition avec intégration simultanée d'un courant qui circule à travers la résistance de détection (16) dans un premier intégrateur (20) pendant une durée prédéfinie et acquisition avec intégration simultanée d'un courant qui circule à travers une résistance de référence (34) dans un deuxième intégrateur (22) pendant la durée prédéfinie ;
- détermination d'une valeur moyenne de la résistance de détection et d'une valeur moyenne de la résistance de référence ;
- amplification de la valeur moyenne de la résistance de détection et de la valeur moyenne de la résistance de référence et formation d'un signal différentiel à partir de la valeur moyenne de la résistance de détection et de la valeur moyenne de la résistance de référence dans un amplificateur de mesure (24) ;
- délivrance du signal différentiel.

2. Procédé selon la revendication 1, **caractérisé en ce que** le premier et le deuxième intégrateur acquièrent avec intégration le courant qui circule à travers la résistance de détection ou à travers la résistance de référence sensiblement pendant toute la durée de l'impulsion du courant de chauffage.

3. Procédé selon la revendication 1 ou 2, **caractérisé en ce que** le signal différentiel est un signal analogique qui est converti en un signal numérique au moyen d'un convertisseur A/N (26).

4. Procédé selon l'une des revendications précédentes, **caractérisé en ce que** la résistance de détection possède un coefficient de température α et une résistance de base R0 qui sont relativement grands, de préférence α > 0,003 1/K et R0 > 10 kΩ.

5. Dispositif de mesure destiné à mesurer la vitesse d'écoulement de fluides, conçu pour mettre en oeuvre le procédé selon l'une des revendications 1 à 4, comprenant un capteur thermique (12) doté d'au moins une résistance chauffante (14) et d'au moins une résistance de détection (16), la résistance chauffante étant couplée thermiquement avec la résistance de détection, et un circuit de mesure (18), le circuit de mesure (18) comprenant :
- un premier intégrateur (20) destiné à la mesure avec intégration d'un courant à travers la résistance de détection (16),
- un deuxième intégrateur (22) destiné à la mesure avec intégration d'un courant à travers une résistance de référence (34),
- un amplificateur différentiel (24) et
- une unité de sortie (28) pour le signal déterminé au moyen du circuit de mesure (18).

6. Dispositif de mesure selon la revendication 5, **caractérisé en ce que** le premier intégrateur (20) et le deuxième intégrateur (22) sont disposés sur une puce.

7. Dispositif de mesure selon la revendication 5 ou 6, **caractérisé en ce que** la résistance de référence (34) possède une valeur de résistance qui se situe approximativement au centre des valeurs de résistance minimale et maximale de la résistance de détection (16).

8. Dispositif de mesure selon l'une des revendications 5 à 7, **caractérisé en ce que** l'amplificateur différentiel possède un facteur d'amplification élevé.

9. Dispositif de mesure selon l'une des revendications 5 à 8, **caractérisé en ce que** la résistance de détection possède un coefficient de température α et une résistance de base R0 qui sont relativement grands, de préférence α > 0,003 1/K et R0 > 10 kΩ.

10. Dispositif de mesure selon l'une des revendications 5 à 9, **caractérisé en ce que** la résistance de référence (34) présente un très faible coefficient de température.

11. Dispositif de mesure selon l'une des revendications 5 à 10, **caractérisé en ce qu'**une batterie (17) est présente en tant que source de courant.
